# EUROPEAN PATENT SPECIFICATION

(11) **EP 1 642 308 B1**
(45) Date of publication and mention of the grant of the patent: **14.11.2007**
(21) Application number: 04737193.5
(22) Date of filing: 28.06.2004
(51) Int. Cl.: H01H 13/70

(54) **A PROPORTIONAL INPUT INTERFACE**
EINE PROPORTIONALE EINGABENSCHNITTSTELLE
INTERFACE DE SAISIE PROPORTIONNELLE

(30) Priority: 30.06.2003 US 483771 P
(43) Date of publication of application: 05.04.2006
(73) Proprietor: Koninklijke Philips Electronics N.V., 5621 BA Eindhoven (NL)
(72) Inventor: MARMAROPOULOS, George, Briarcliff Manor, New York 10510-8001 (US); MAMA, Jack Kyriakos, c/o Philips Design, Eindhoven 5611 AZ (NL); VU, Giang T., Briarcliff Manor, New York 10510-8001 (US)
(74) Representative: Damen, Daniel Martijn
(86) International application number: PCT/IB2004/051031
(87) International publication number: WO 2005/000052

(56) References cited:
- DE-A- 19 836 805
- LU-A- 90 871
- US-B1- 6 360 615

## Description

The present invention relates to textile electronics. More particularly, the present invention relates to an input device integrated into a flexible textile electronic circuit, or the like, for detecting proportional input from one or more diverse directions and cooperative with various textile electronic applications and/or operations.

The use of electronics in various manufactured materials is well known; see for example, DE 198 36 805, U.S. Patent Nos. 6,360,615 B1, 6,210,771 B1, and 5,371,326; U.S. Patent Application Publication No. 2002/0135457 A1; PCT International Patent Publication Nos. WO 02/055923 A1 and WO 02/32665 A1; and/or UK Patent Application No. GB 2 373 863. Devices such as conductive traces, bio-sensors, electrodes, computers, electronic circuits and the like have all been incorporated into textiles. As the benefits associated with the various types and/or configurations of textile electronics become more apparent, the desirability and need for simple, effective and efficient, as well as intuitive user interface solutions becomes more apparent. Hence, there is a need for an input device or interface that is complementary to the various electronic functions/systems provided by the different textile electronics and/or the materials accommodating such electronics.

It is an object of the present invention to provide an interface suitable to address the above-identified need for simple, effective and efficient, as well as intuitive user interface solutions.

It is another object of the present invention to provide such an interface that has a flexible textile construction.

It is another object of the present invention to provide such an interface that can be proportionally manipulated.

It is another object of the present invention to provide such an interface having an actuating member for cooperating with one or more areas of conductive variable resistance elastomeric material.

It is a further object of the present invention to provide such an interface that can cooperate with a garment, upholstery, and/or various electronic devices/systems.

It is another object of the present invention to provide such an interface that is suitable for facilitating intuitive user interface solutions for textile electronics.

It is still another object of the present invention to provide such an interface suitable for accomplishing a variety of relatively sophisticated operations/functions.

These and other objects and advantages of the present invention are achieved by an input device or interface having a fabric or textile construction fashioned from at least a conductive elastomeric material suitable for converting motion into a signal, and an actuator for cooperating with the conductive elastomeric material to provide an intuitive user interface. The interface can take the form of any number of electronic switches and/or controls suitable for providing user interface solutions for different textile electronics and/or related devices/systems/equipment. The conductive elastomeric material can be selectively and/or proportionally manipulated to facilitate accomplishing one or more relatively complicated electronic functions/operations. The manipulation of the conductive elastomeric material by, for example, an interaction, can be detected via the relative properties or characteristics of one or more areas of the conductive elastomeric material.
Fig. 1 is a plan perspective view of a proportional input interface in accordance with an illustrative embodiment of the present invention;
Fig. 2 is a plan view of a proportional input interface in accordance with another illustrative embodiment of the present invention with the interface being in an inoperative or non-use state;
Fig. 3 is a plan view of a proportional input interface in accordance with still another illustrative embodiment of the present invention with the interface being in an inoperative or non-use state
Fig. 4 is a plan view of the proportional input interface of Fig. 2 with the interface being in a manipulated or operative state;
Fig. 5 is a plan view the proportional input interface of Fig. 3 with the interface being in a manipulated or operative state; and
Fig. 6 is a front view of a garment incorporating the proportional input interface in accordance with another illustrative embodiment of the present invention.

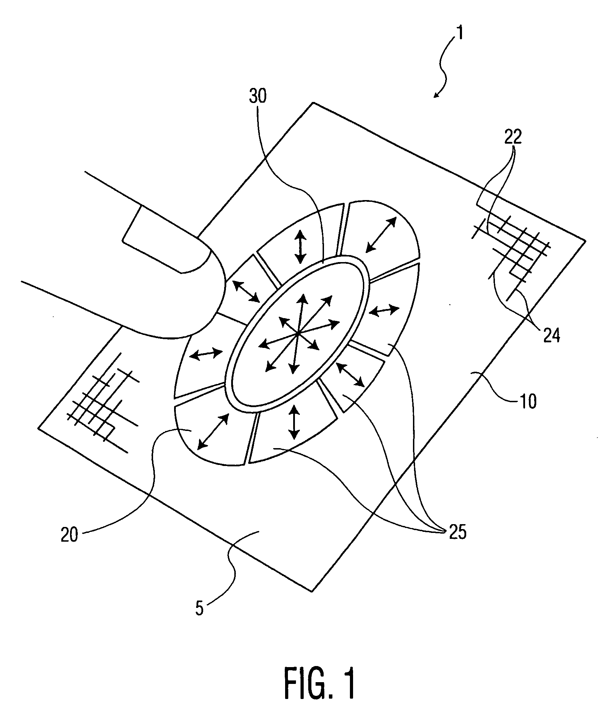

Referring to the drawings and, in particular, Fig. 1, a textile having a fiber mesh or construction in accordance with an illustrative embodiment of the present invention is shown and generally represented by reference numeral 1. Preferably, textile construction 1 is fashioned with an input device or interface 10 having one or more areas of conductive elastomeric material 20 suitable for converting a mechanical interaction or motion into a signal via the properties or characteristics of such material. The textile construction 1 preferably also has an actuator 30 cooperative with the one or more areas of conductive elastomeric material 20 to translate and/or communicate any interaction or user input to the conductive elastomeric material 20.

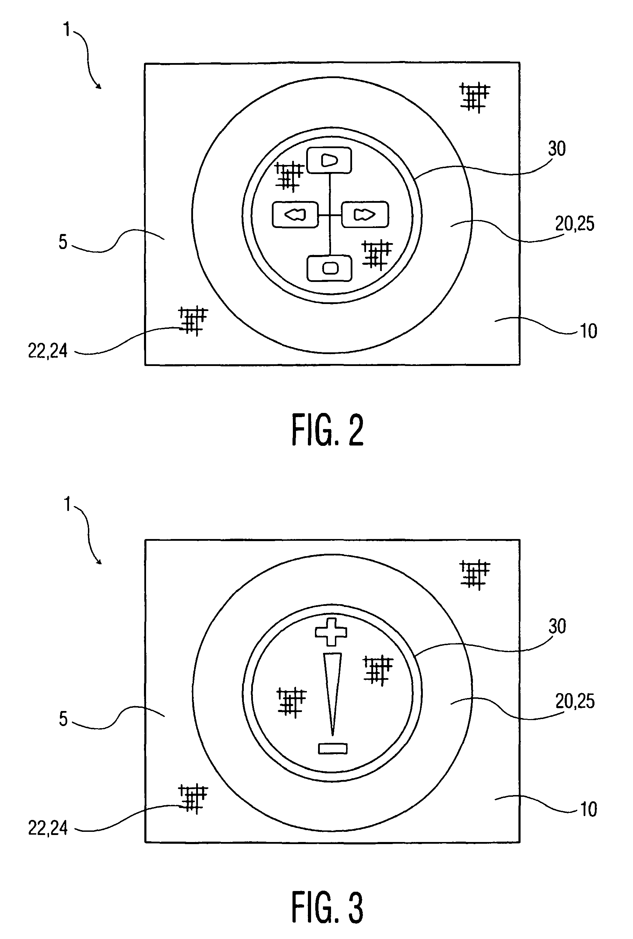

Referring to Figs. 1 through 3, the interface 10 preferably can be formed into a multitude of different patterns facilitating a variety of different applications in use. The interface 10 preferably can cooperate with a variety of different electronic devices/systems, such as for example, various wearable electronics, biosensors, medical instruments, or health therapy equipment. The interface 10 may also operate independently to accomplish a variety of different electronic operations. The interface 10, in addition to the conductive elastomeric material 20 and the actuator 30, can have any number of other materials and/or elements appropriate for forming one or more electronic switches and/or controls. Moreover, the interface 10 can be any desired shape, size and/or configuration necessary for facilitating a multitude of electronic operations/functions.

Preferably, the one or more areas of conductive elastomeric material 20 have one or more conductive and/or physical characteristics that change in response to being stretched or manipulated in some fashion. For example, the conductive elastomeric material 20 can have piezoelectric characteristics such as those provided by any of the following known materials: a polypyrrole/lycra material, a polypyrrole/nylon material, a polypyrrole/polyester material, or any conjugated polymer, and ion-implanted polymers, or any combination of such materials. The conductive elastomeric material 20 can also be selected from one or more of the following types and/or combinations of material: a flexible metal coated fabric including woven, non-woven, and/or knit, filaments, foils, and yarns, a conductive polymer coated fiber/fabric, a conductive graphitized fiber/fabric, or a conductive gel coated fiber/fabric. The conductive elastomeric material 20 preferably has characteristics suitable to provide appropriate flexibility and durability to withstand the stresses associated with the manufacture and use of a variety of different types of textile constructions.

Preferably, the conductive elastomeric material 20 can also facilitate electrical communication between an electrical power source 60 and the interface 10 via the textile construction 1. Preferably, the interface 10 can, in turn, facilitate power being provided to any of a variety of textile electronics. A connector 70 preferably can provide a medium for the electrical communication between the electrical power source and the textile construction 1. The connector 70 can have any configuration suitable to provide the means or way for this electrical communication. The conductive elastomeric material 20 can also have any of a variety of different shapes, sizes or configurations so that the interface 10 can be adapted to accommodate different uses.

It is noted that the conductive elastomeric material 20 can also be fashioned from a combination of conductive fibers 22 and non-conductive fibers 24 using any known conventional method for weaving, sewing and/or knitting. Preferably each conductive fiber 22 can have any of a variety of forms. For example, conductive fibers 22 can have a conductive threadlike core enclosed by a conductive semi-fluid sleeve. The core and sleeve preferably being bonded together via sonic welding. It is noted that other connecting methods may also be used. Conductive fibers 22 can be any of a variety of materials and/or combination of materials. For example, conductive fibers 22 can be fashioned from metalized foils, conductive polymers, graphitized/metalized fibers, or conductive gels (e.g., conductive silicon), or any combination of the same. Preferably, each non-conductive fiber can have, in addition to an appropriate amount of elasticity and/or extensibility, properties that facilitate comfortable interaction with the skin, such as for example, lycra, spandex, neoprene, polyester, and/or a rubber extruded fibers. Non-conductive fibers 24 can also preferably have different shapes, sizes or configurations such that interface 10 can have different adaptations to accommodate different uses. It is noted that not all of the non-conductive fibers 24 need have elastomeric properties and that a composite of elastomeric fibers and non-elastomeric materials may also be used to accomplish the intended purposes of the present invention.

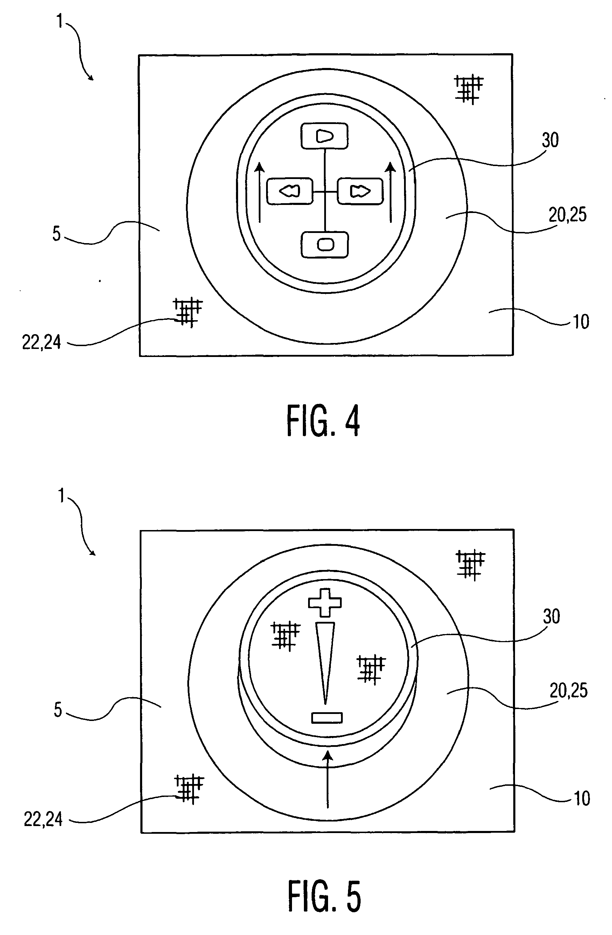

Referring generally to Figs. 1 through 5, actuator 30 preferably cooperates with the one or more areas of conductive elastomeric material 20 to facilitate converting a motion or mechanical interaction into a signal for affecting and/or effecting an electronic operation/function. Preferably, the actuator 30 is formed from a relatively rigid material such as, for example, a plastic, a rubber, a combination of plastic and rubber, or any similar material suitable for fashioning the interface 10 of the present invention. Preferably, the actuator 30 is annular and is in at least close proximity with the one or more areas of conductive elastomeric material 20. The actuator 30 can also be in direct contact, or even integral with the one or more areas of conductive elastomeric material 20.

Preferably, the one or more areas of conductive elastomeric material 20 have properties or characteristics (e.g., resistance, capacity, etc.) that change in response to an interaction via the interface 10. This interaction can be brought about via a user through some peripheral means or via actuator 30. Thus, any relative movement of said one or more areas 25 of conductive elastomeric material is detectable via a change in the characteristics the one or more areas 25 thereof. Preferably, the displacement ratio between the one or more areas 25 of the conductive elastomeric material 20 can be used to quantify the degree of the interaction and/or to quantify the speed or rate of the interaction.

Accordingly, the interface 10 is suitable for use in a variety of different wearable electronic applications and/or for accomplishing one or more different complex functionalities requiring proportional input. The interface 10 of the present invention is preferably a highly flexible/resilient, lightweight high-performance intuitive user interface that can cooperate with a textile as well as with any of a variety of different textile electronics and the like without compromising the physical characteristics (e.g., comfort and/or durability) associated with the textile.

Having described some of the preferred characteristics of an illustrative embodiment, the process or method for forming a flexible textile interface 10, preferably includes fashioning an interface 10 from a conductive elastomeric textile 1 such as those previously identified. Next, providing the interface 10 with an actuator 30 for cooperating with one or more conductive areas 20 of said interface 10. The actuator 30 can be permanently embedded into or integral with the conductive elastomeric textile 1 proximate the one or more conductive areas 20 of said interface. The actuator 30 and/or the interface 10 can also be attached to a surface 5 of the conductive elastomeric textile 1 via any suitable method known in the art, such as for example, knitting, embroidering, weaving or laminating.

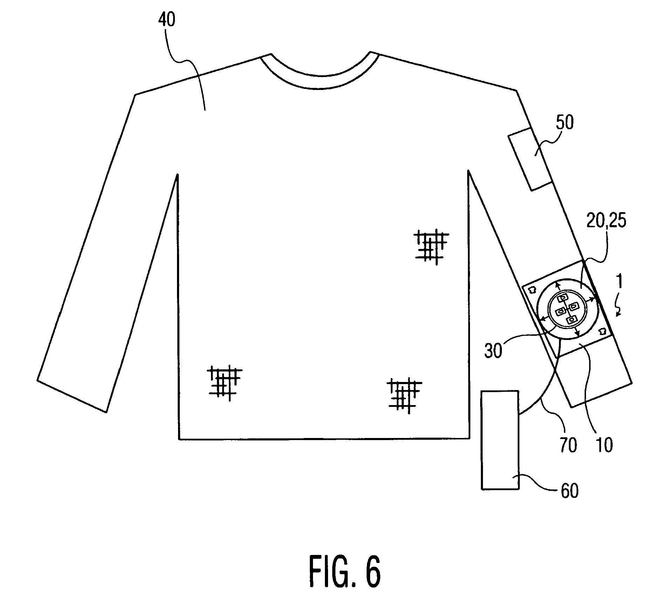

Referring to Fig. 6, preferably, the interface 10 can, in turn, be either connected to, or integral with, a garment 40 or upholstery suitable for cooperating with one or more electronic devices and/or systems 50. The connecting/integrating of the interface 10 to/with the garment 40 can be accomplished in any manner known in the art for accomplishing such operations.

## Claims

1. A textile construction (1), comprising
- a plurality of areas (25) of conductive elastomeric material (20), each area of conductive elastomeric material being suitable for converting an interaction therewith into a signal, **characterized by** further comprising
- an annular actuator (30) for providing said interaction with each one of said areas thereby providing an intuitive user interface (10) for performing a plurality of functions.

2. The textile construction (1) of claim 1, wherein one or more characteristics of said conductive elastomeric material (20) change in response to said interaction, any relative movement of the plurality of areas (25) being detectable via a change in the characteristics thereof.

3. The textile construction (1) of claim 1, wherein said conductive elastomeric material is a polypyrrole/lycra, a polypyrrole/nylon, a polypyrrole/polyester, or any other conjugated polymer, or ion-implanted polymer, or any combination of the same.

4. The textile construction (1) of claim 1, wherein said conductive elastomeric material can have one or more of the following: a flexible metal coated fabric including woven, non-woven, and/or knit, filaments, foils, and yarns, a conductive polymer coated fiber/fabric, a conductive graphitized fiber/fabric, or a conductive gel coated fiber/fabric, and/or any combination of the same.

5. The textile construction (1) of claim 1, wherein said actuator (30) is formed from a relatively rigid material.

6. The textile construction (1) of claim 1, wherein said actuator (30) is formed from plastic, rubber or some combination thereof.

7. The textile construction (1) of claim 1, wherein the displacement ratio between two or more areas (25) is used to quantify the degree of said interaction and/or quantify the speed or rate of said interaction.

8. The textile construction (1) of claim 1, wherein one or more characteristics of said conductive elastomeric material (20) change in proportional response to said interaction, said interaction causing one or more areas (25) of said conductive elastomeric material to be displaced.

9. A garment (40) comprising the textile construction (1) of any one of claims 1-8.

10. A method for forming a textile construction (1) according to claim 1, comprising the steps of:
- Fashioning the textile construction with an interface (10) from a conductive elastomeric textile,
- providing the interface (10) with an annular actuator (30) for cooperating with a plurality of areas (25) of conductive elastomeric material (20) of said interface.

11. The method of claim 10, wherein the actuator (30) is attached to a surface (5) of the conductive elastomeric textile (1) via knitting, embroidering weaving or laminating.

12. The method of claim 10 or 11, further comprising the step of connecting said interface (10) with a garment (40) or upholstery cooperative with one or more electronic devices and/or systems (50).

13. The method of claim 10 or 11, wherein said interface (10) is integral to a garment (40) or upholstery suitable for cooperating with one or more electronic devices and/or systems (50).

## Patentansprüche

1. Textile Konstruktion (1), die Folgendes umfasst:
- eine Vielzahl von Flächen (25) aus leitfähigem elastomeren Material 20, wobei jede Fläche aus leitfähigem elastomeren Material geeignet ist, eine Interaktion mit dieser in ein Signal umzuwandeln, **dadurch gekennzeichnet, dass** sie weiter
- ein ringförmiges Bedienelement (30) zum Bereitstellen der genannten Interaktion mit jeder der genannten Flächen umfasst, wobei es dabei ein intuitives Benutzerinterface (10) zum Durchführen einer Vielzahl von Funktionen bereitstellt.

2. Textile Konstruktion (1) nach Anspruch 1, in der sich eine oder mehr Charakteristiken des genannten leitfähigen elastomeren Materials (20) auf die genannte Interaktion hin ändern, wobei jede beliebige relative Bewegung der Vielzahl der Flächen (25) über eine Änderung in den Charakteristiken davon detektierbar ist.

3. Textile Konstruktion (1) nach Anspruch 1, in der das genannte leitfähige elastomere Material ein Polypyrrol/Lycra, ein Polypyrrol/Nylon, ein Polypyrrol/Polyester, oder jedes beliebige andere konjugierte Polymer oder ionenimplantiertes Polymer oder jede beliebige Kombination derselben ist.

4. Textile Konstruktion (1) nach Anspruch 1, in der das genannte leitfähige elastomere Material mit einem oder mehr des Folgenden ausgestattet sein kann: ein flexibler metallbeschichteter Stoff mit Gewebtem, Nichtgewebtem und/oder Gestricktes, Fäden, Folien, und Garne, eine leitfähige polymerbeschichtete Faser bzw. ein leitfähiger polymerbeschichteter Stoff, eine leitfähige grafitisierte Faser bzw. ein leitfähiger grafitisierter Stoff oder eine leitfähige gelbeschichtete Faser bzw. ein leitfähiger gelbeschichteter Stoff oder jede beliebige Kombination derselben.

5. Textile Konstruktion (1) nach Anspruch 1, in der das genannte Bedienelement (30) aus einem relativ steifen Material gebildet ist.

6. Textile Konstruktion (1) nach Anspruch 1, in der das genannte Bedienelement (30) aus Plastik, Gummi oder irgendeiner Kombination davon gebildet ist.

7. Textile Konstruktion (1) nach Anspruch 1, in der das Verschiebungsverhältnis zwischen zwei oder mehr Flächen (25) verwendet wird, den Grad der Interaktion zu quantifizieren und/oder die Geschwindigkeit oder das Tempo der genannten Interaktion zu quantifizieren.

8. Textile Konstruktion (1) nach Anspruch 1, in der sich eine oder mehr Charakteristiken des genannten leitfähigen elastomeren Materials (20) proportional auf die genannte Interaktion hin ändern, wobei die genannte Interaktion verursacht, dass eine oder mehr Flächen (25) des genannten leitfähigen elastomeren Materials verschoben werden.

9. Kleidungsstück (40) mit der textilen Konstruktion (1) nach einem der Ansprüche 1-8.

10. Verfahren zum Bilden einer textilen Konstruktion (1) nach Anspruch 1, das folgende Schritte umfasst:
- Fertigen der textilen Konstruktion mit einem Interface (10) aus einem leitfähigen elastomeren Textil;
- Versehen des Interfaces (10) mit einem ringförmigen Bedienelement (30) zur Zusammenarbeit mit einer Vielzahl von Flächen (25) aus leitfähigem elastomeren Material (20) des genannten Interfaces.

11. Verfahren nach Anspruch 10, in dem das Bedienelement (30) über Stricken, Sticken, Weben oder Laminieren an einer Fläche (5) des leitfähigen elastomeren Textils (1) befestigt wird.

12. Verfahren nach Anspruch 10 oder 11, das weiter den Schritt enthält, das genannte Interface (10) mit einem Kleidungsstück (40) oder Bezugsstoff zu verbinden, die mit einer (einem) oder mehr elektronischen Einrichtungen und/oder Systemen (50) zusammenarbeiten.

13. Verfahren nach Anspruch 10 oder 11, in dem das genannte Interface (10) in ein Kleidungsstück (40) oder einen Bezugstoff integriert ist, die geeignet sind, mit einer (einem) oder mehr elektronischen Einrichtungen und/oder Systemen (50) zusammenzuarbeiten.

## Revendications

1. Structure textile (1), comprenant :
- une pluralité de zones (25) de matériau élastomère conducteur (20), chaque zone de matériau élastomère conducteur convenant pour convertir une interaction de celles-ci en un signal, **caractérisée en ce qu'**elle comprend en outre :
- un dispositif d'actionnement (30) annulaire pour assurer ladite interaction avec chacune desdites zones en formant de la sorte une interface utilisateur intuitive (10) pour remplir une pluralité de fonctions.

2. Structure textile (1) selon la revendication 1, dans laquelle une ou plusieurs caractéristiques dudit matériau élastomère conducteur (20) varie(nt) en fonction de ladite interaction, tout mouvement relatif de la pluralité de zones (25) pouvant être détecté par une variation de ses caractéristiques.

3. Structure textile (1) selon la revendication 1, dans laquelle ledit matériau élastomère conducteur est un polypyrrole/Lycra, un polypyrrole/Nylon, un polypyrrole/polyester ou tout autre polymère conjugué, ou un polymère implanté d'ions, ou une combinaison quelconque de ceux-ci.

4. Structure textile (1) selon la revendication 1, dans laquelle le matériau élastomère conducteur peut être un ou plusieurs des éléments suivants : un tissu revêtu de métal flexible, notamment tissé, non tissé et/ou tricoté, des filaments, des feuilles et des fils, une fibre ou un tissu revêtu(e) de polymère conducteur, une fibre ou un tissu graphité(e) conducteur(trice), ou une fibre ou un tissu revêtu(e) de gel conducteur et/ou une combinaison quelconque de ceux-ci.

5. Structure textile (1) selon la revendication 1, dans lequel ledit dispositif d'actionnement (30) est formé d'un matériau relativement rigide.

6. Structure textile (1) selon la revendication 1, dans lequel ledit dispositif d'actionnement (30) est formé d'un matériau synthétique, de caoutchouc ou d'une combinaison quelconque de ceux-ci.

7. Structure textile (1) selon la revendication 1, dans lequel le rapport de déplacement entre deux ou plusieurs zones (25) est utilisé pour quantifier le degré de ladite interaction et/ou quantifier la vitesse de ladite interaction.

8. Structure textile (1) selon la revendication 1, dans lequel une ou plusieurs caractéristiques dudit matériau élastomère conducteur (20) varie(nt) en réponse proportionnelle à ladite interaction, ladite interaction provoquant le déplacement d'une ou plusieurs zones (25) dudit matériau élastomère conducteur.

9. Vêtement (40) comprenant la structure textile (1) selon l'une quelconque des revendications 1 à 8.

10. Procédé de formation d'une structure textile (1) selon la revendication 1, comprenant les étapes suivantes :
- on élabore la structure textile avec une interface (10) formée d'un textile élastomère conducteur, et
- on équipe l'interface (10) d'un dispositif d'actionnement (30) annulaire pour coopérer avec une pluralité de zones (25) de matériau élastomère conducteur (20) de ladite interface.

11. Procédé selon la revendication 10, dans laquelle le dispositif d'actionnement (30) est fixé sur une surface (5) du textile élastomère conducteur (1) par tricotage, broderie, tissage ou contrecollage.

12. Procédé selon la revendication 10 ou 11, comprenant en outre l'étape de raccordement de ladite interface (10) avec un vêtement (40) ou un ameublement pouvant coopérer avec un ou plusieurs dispositifs et/ou systèmes électroniques (50).

13. Procédé selon la revendication 10 ou 11, dans lequel ladite interface (10) fait partie intégrante d'un vêtement (40) ou d'un ameublement pour coopérer avec un ou plusieurs dispositifs et/ou systèmes électroniques (50).
